# FASCICULE DE BREVET EUROPEEN

(11) **EP 2 979 815 B1**
(45) Date de publication et mention de la délivrance du brevet: **15.05.2019**
(21) Numéro de dépôt: 14179301.8
(22) Date de dépôt: 31.07.2014
(51) Int. Cl.: B25B 5/06, F01D 25/28, B23P 15/00, F01D 9/04

(54) **Application de joint de liaison sur un étage redresseur au moyen de vessies gonflables**
Anbringungen einer Verbindungsfuge auf einer Leitschaufelstufe mittels aufblasbarer Blasenkörper
Application of bonding seal on a guide vane stage by means of inflatable bladders

(43) Date de publication de la demande: 03.02.2016
(73) Titulaire: Safran Aero Boosters SA, 4041 Herstal (BE)
(72) Inventeur: Duchaine, Georges, 4608 Warsage (BE)
(74) Mandataire: Lecomte & Partners

(56) Documents cités:
- EP-A1- 1 493 901
- FR-A1- 2 989 414
- FR-A1- 2 995 554
- GB-A- 2 400 415
- US-A- 5 316 202
- US-A1- 2010 236 332

## Description

L'invention a trait au domaine de l'assemblage de turbine, notamment de turbo machines de moteur d'avion. Plus particulièrement, l'invention a trait à l'assemblage d'un étage redresseur de turbine, notamment un procédé et un dispositif d'assemblage selon le préambule de la revendication 1 et de la revendication 10 respectivement.

Il est connu de réaliser l'assemblage d'un étage redresseur de turbomachine par un procédé de scellement des aubes à la virole interne du redresseur. Le scellement s'effectue généralement par remplissage de matériau pâteux, notamment d'une résine silicone, dans un ajour entre chacune des aubes et la virole interne du redresseur de manière à former un joint de liaison. Le procédé comprend généralement une étape de finition du joint destinée à minimiser la perturbation du flux d'air traversant l'étage. Le procédé est cependant onéreux pour assurer un joint de liaison de qualité.

Le document de brevet FR 2 989 414 A1 décrit un procédé d'assemblage d'un étage redresseur de turbomachine selon le préambule de la revendication 1. Il divulgue l'usage d'un outillage destiné à mettre en oeuvre un tel procédé d'assemblage. L'outillage comprend des contres formes installées une par une entre les aubes et destinées à recouvrir de façon étanche les ajours destinés à recevoir le matériau de scellement. Cet outillage est intéressant en ce qu'il permet de faciliter la réalisation du joint. L'assemblage, en particulier le montage et le démontage des contre formes, est cependant chronophage. De plus, cet outillage doit être adapté à chaque architecture de redresseur, essentiellement en fonction de l'espace entre les aubes et du profil desdits aubes.

Le document FR 2 995 554 A1 propose un dispositif d'assemblage d'un étage redresseur de turbomachine selon le préambule de la revendication 10. Il décrit un procédé de fabrication simultané d'aubes en matériau composite pour turbomachine. Le moule employé comporte plusieurs empreintes d'aubes, chaque empreinte présentant une vessie gonflable. Ce moule comprend des surfaces de moulage pour réaliser les viroles interne et externe en même temps que les aubes.

L'invention a pour objectif de proposer une solution qui pallie au moins un inconvénient susmentionné de l'état de la technique. Plus particulièrement, l'invention a pour objectif de proposer une solution d'assemblage qui soit efficace.

L'invention a pour objet un procédé d'assemblage d'un étage redresseur de turbomachine, ledit étage comprenant une virole interne, une virole externe et des aubes s'étendant radialement entre les viroles interne et externe, le procédé comportant les étapes suivantes : (a) mise en position d'au moins une des aubes et/ou d'au moins une partie d'une des viroles interne et externe, de manière à ce que ladite ou chacune desdites aubes traverse un ajour, respectivement, de ladite virole ou partie de virole ; et (c) application d'un matériau de scellement entre l'aube ou chacune des aubes et l'ajour correspondant, sur une face de la virole ou partie de virole, de manière à former un joint de liaison entre l'aube ou chacune des aubes et la virole ou partie de virole ; remarquable en ce que le procédé comprend l'étape intermédiaire suivante : (b) application d'au moins une vessie gonflable contre l'ajour ou chacun des ajours, sur la face de la virole ou partie de virole qui est opposée à la face d'application du matériau de scellement, de manière à former une ou plusieurs surfaces de retenue dudit matériau de scellement. Le matériau de scellement est essentiellement une résine ou un élastomère.

Une vessie est essentiellement une poche en matériau extensible et étanche à l'air.

Selon un mode avantageux de l'invention, l'étape (b) du procédé comprend l'application de plusieurs vessies reliées entre elles de manière aéraulique pour pouvoir être gonflées en même temps, préférentiellement à partir d'un distributeur central d'air.

Selon un mode avantageux de l'invention, les vessies sont reliées entre elles via un support commun apte à s'étendre le long de la virole ou partie de virole recevant le ou les joints de liaison.

Selon un mode avantageux de l'invention, l'étape (b) comprend l'application de la vessie ou d'au moins une des vessies entre deux aubes voisines, respectivement, ladite ou chacune desdites vessies étant ensuite gonflée de manière à prendre appui sur les deux aubes et sur la virole entre les deux aubes.

Selon un mode avantageux de l'invention, l'étape (a) comprend également la mise en place de l'autre des viroles interne et externe, la vessie ou chacune des vessies étant gonflée de manière à prendre appui, en outre, sur ladite autre virole, entre les deux aubes.

Selon un mode avantageux de l'invention, l'étape (b) comprend l'application d'une des vessies de chaque côté de la ou d'au moins une des aubes de manière à former deux surfaces de retenue à la périphérie de ladite aube ou de chacune desdites aubes, lesdites surfaces étant jointives à l'avant et/ou à l'arrière de ladite aube.

Selon un mode avantageux de l'invention, les deux surfaces de retenue à la périphérie de l'aube ou de chacune des aubes sont jointives à l'avant et à l'arrière de ladite aube de manière à couvrir la totalité de l'ajour correspondant.

Selon un mode avantageux de l'invention, les surfaces de retenue peuvent être jointives sur une longueur dans une direction majoritairement axiale de plus de 20% de la largeur des aubes, préférentiellement plus de 50%.

Selon un mode avantageux de l'invention, les surfaces jointives s'étendent essentiellement dans la direction axiale du redresseur.

Selon un mode avantageux de l'invention, la ou chacune des surfaces de retenue de la ou des vessies contre l'ajour ou contre chacun des ajours forme un rayon de raccordement d'une valeur comprise entre 0,2mm et 10mm, préférentiellement entre 2mm et 5mm.

Selon un mode avantageux de l'invention, l'étape (c) est suivie d'une étape de remplissage d'abradable dans et/ou sur la virole interne par le matériau de scellement utilisé à l'étape (b) ou bien par un matériau d'un autre type, lesdits matériaux de scellement et d'un autre type étant préférentiellement à base de silicone.

L'invention a également pour objet un dispositif d'assemblage d'un étage redresseur de turbomachine, le redresseur comprenant une virole interne ou une partie de virole interne, une virole externe ou une partie de virole externe et des aubes s'étendant radialement entre les viroles ou parties de virole interne et externe et montées au travers d'ajours dans les viroles ou parties de virole, le dispositif d'assemblage comprend plusieurs vessies gonflables configurées pour être appliquées entre des aubes voisines et contre des ajours puis gonflées pour former une ou plusieurs surfaces de retenue d'un matériau de scellement lors de son application entre les aubes et les ajours, remarquable en ce qu'il comprend un support allongé reliant les vessies gonflables, ledit support étant destiné à être connecté à une source de gaz sous pression et à distribuer ledit gaz dans chacune des vessies, et un gabarit apte à soutenir le support allongé, ledit gabarit étant réalisé pour être fixé sur une virole ou une partie de virole.

Selon un mode avantageux de l'invention, les vessies sont de forme moyenne parallélépipédique, préférentiellement courbée le long de leur base de façon à faciliter leur insertion entre deux aubes.

Selon un mode avantageux de l'invention, le support allongé, est en forme de tore ou portion de tore.

Selon un mode avantageux de l'invention, le gabarit comprend des moyens de fixation rapide à la virole ou à la partie de virole, préférentiellement des moyens de fixation à ressort et/ou à clippage.

Selon un autre mode avantageux de l'invention, le dispositif comprend une tubulure centrale de distribution d'air, ladite tubulure étant reliée de façon aéraulique à chacune des vessies gonflables.

Selon un mode avantageux de l'invention, le dispositif comprend de multiples gabarits configurés pour soutenir chacune des vessies indépendamment.

Selon l'un ou l'autre des modes avantageux de l'invention, le dispositif est configuré pour être monté sur une table d'assemblage.

L'invention a également pour objet, une table d'assemblage d'un étage redresseur de turbomachine, remarquable en ce qu'elle comprend un dispositif d'assemblage conforme à l'invention.

Selon un mode avantageux de l'invention, la table d'assemblage comprend une surface d'assemblage, préférentiellement horizontale, le dispositif étant disposé sur la surface d'assemblage.

Selon un mode avantageux de l'invention, le dispositif d'assemblage est configuré pour pouvoir être appliqué sur l'étage redresseur par un mouvement relatif entre ledit étage et la table dans la direction axiale du redresseur.

Les mesures de l'invention sont intéressantes en ce qu'elles permettent la mise en oeuvre du procédé de scellement des aubes de l'étage redresseur de manière efficace. En effet, les vessies gonflables sont aptes à recouvrir automatiquement et de manière étanche l'ensemble des espaces destinés à être remplis de matériau de scellement ce qui accélère l'assemblage et harmonise la qualité entre les différents joints de liaison.

D'autres caractéristiques et avantages de la présente invention seront mieux compris à l'aide de la description et des dessins parmi lesquels :
- La figure 1 est une vue simplifiée dans la direction axiale d'un étage redresseur de turbomachine ;
- La figure 2 est une vue en coupe radiale d'une portion de l'étage redresseur de la figure 1 équipé d'un dispositif d'assemblage conforme à l'invention ;
- La figure 3 est une vue simplifiée du dispositif d'assemblage conforme à l'invention et dans un mode particulier de réalisation ;
- La figure 4 est une vue en perspective de l'étage redresseur de la figure 2 équipé de vessies gonflables selon un mode avantageux de l'invention ;
- La figure 5 est une vue en coupe radiale de l'étage redresseur de la figure 4 ;
- La figure 6 est une vue en coupe tangentielle de l'étage redresseur de la figure 4 ;

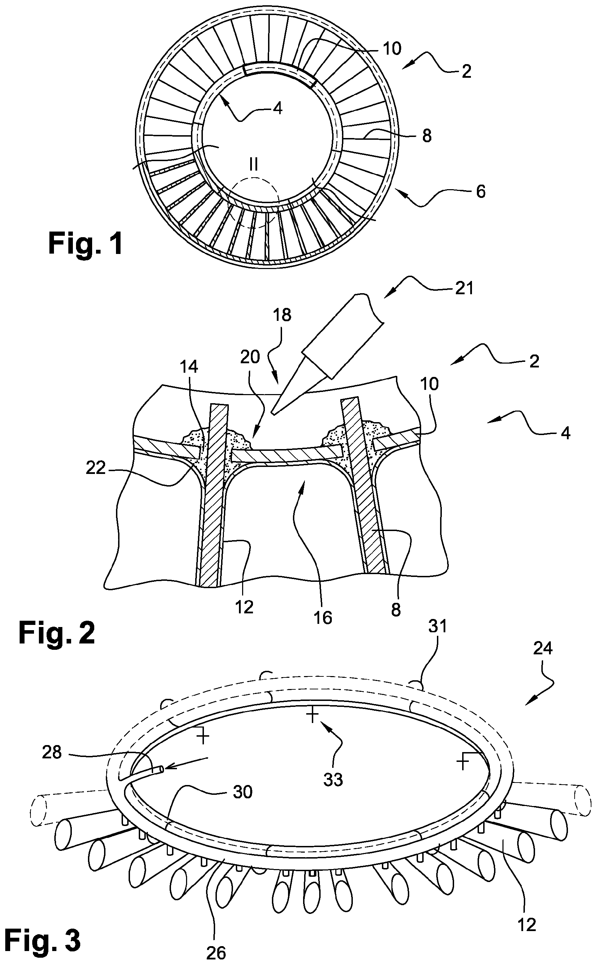

La figure 1 est une vue simplifiée dans la direction axiale d'un étage redresseur 2 de turbomachine. L'étage comprend une virole interne 4, une virole externe 6 et des aubes 8 s'étendant radialement entre les viroles interne 4 et externe 6. Les viroles interne 4 et externe 6 peuvent être réalisées par un assemblage de parties de virole. On peut observer à titre d'exemple sur l'image une partie de virole 10 de la virole interne 4 de l'étage 2 en question. La virole externe 6 peut également être assemblée par des parties de virole formant par exemple des segments. Les aubes 8 de l'étage sont assemblées à l'une des viroles 4 et 6 par une résine ou un polymère de scellement. Dans le mode de réalisation présenté plus bas, seule la virole interne 4 ou les parties de virole 10 la constituant est/sont assemblée(s) aux aubes 8 par un matériau de scellement, ce qui ne limite en rien l'invention.

La figure 2 est une vue en coupe radiale d'une portion II de l'étage redresseur 2 équipé d'un dispositif d'assemblage conforme à l'invention. Du dispositif ne sont cependant représentées que des vessies 12 à l'état gonflé. Un tel étage 2 est assemblé par un procédé d'assemblage conforme à l'invention et comportant les étapes suivantes : (a) mise en position d'au moins une des aubes 8 et/ou d'au moins une partie 10 d'une des viroles interne 4 et externe, de manière à ce que ladite ou chacune desdites aubes 8 traverse un ajour 14 respectif de ladite virole 4 ou partie de virole 10; (b) application d'au moins une vessie gonflable 12 contre l'ajour 14 ou chacun des ajours 14, sur la face 16 de la virole 4 ou partie de virole 10 qui est opposée à la face d'application 18 d'un matériau de scellement 20, de manière à former une ou plusieurs surfaces de retenue 22 dudit matériau de scellement 20. Une vessie 12 est essentiellement une poche en matériau extensible et étanche à l'air ; la ou chacune des vessies 12 peut être gonflée de manière à prendre appui sur deux aubes 8 voisines en plus de son application contre la face 16 de la virole 4 et l'ajour ou les ajours 14 ; et (c) application d'un matériau de scellement 20 entre l'aube 8 et l'ajour 14 ou chacune des aubes 8 et l'ajour 14 correspondant, sur la face 18 de la virole 4 ou partie de virole 10, de manière à former un joint de liaison entre l'aube 8 ou chacune des aubes 8 et la virole 4 ou partie de virole 10. Le joint de liaison assure le scellement, il peut également assurer une étanchéité à l'air. Dans un mode particulier de l'invention, l'étape (b) du procédé peut comprendre l'application de plusieurs vessies 12 destinées à être gonflées en même temps ; l'étape (c) peut également être suivie d'une étape de remplissage de matériau abradable (non représenté) dans et/ou sur la virole interne 4 par le matériau de scellement 20 utilisé comme joint de liaison ou bien par un matériau d'un autre type, lesdits matériaux de scellement 20 et d'un autre type étant préférentiellement à base de silicone. Le matériau de scellement 20 et/ou l'abradable peut/peuvent être appliqués manuellement ou de manière automatisée. On peut voir sur l'image une buse 21 pour l'application du matériau de scellement 20.

La figure 3 est une vue simplifiée d'un dispositif d'assemblage 24 d'un étage redresseur (non représenté) de turbomachine conforme à l'invention et dans un mode particulier de réalisation. Ce dispositif 24 est destiné à être utilisé pour le montage des aubes sur la ou les virole(s) de l'étage redresseur comme vu en relation avec la figure précédente. Le dispositif 24 comprend plusieurs vessies gonflables 12 configurées pour être appliquées entre les aubes voisines et contre des ajours, comme vu en relation avec la figure 2, puis gonflées pour former une ou plusieurs surfaces de retenue du matériau de scellement lors de son application entre les aubes et les ajours. Les vessies 12 peuvent être de forme moyenne parallélépipédique droite, nous verrons plus bas comment des vessies de forme courbée peuvent faciliter leur insertion entre les aubes qui peuvent présenter une courbure importante dans un plan radial. Les vessies 12 sont destinées à être gonflées en même temps, ce gonflage pouvant être mis en oeuvre à partir d'un distributeur central d'air ou d'un autre gaz. Dans ce mode de réalisation (non représenté), le dispositif peut comprendre une tubulure centrale de distribution de gaz, chacune des vessies gonflables étant alors reliée indépendamment à cette tubulure. En alternative et comme représenté sur l'image, les vessies 12 peuvent être reliées entre elles de manière aéraulique pour réaliser un passage d'air ou d'un autre gaz entre chaque vessie 12 ; cette liaison est réalisée par un support commun 26 allongé pouvant être en forme de tore ou en portion de tore et connecté par un conduit 28 à une source de gaz sous pression. Le support commun 26 peut être configuré pour être soutenu le long de la virole ou la partie de virole recevant le ou les joint(s) de liaison. De manière à faciliter ce soutien, le dispositif comprend un gabarit 30 configuré pour assurer le maintien du support allongé 26 sur la virole, ce gabarit 30 pouvant être réalisé pour être fixé sur la virole ou une partie de virole par exemple avec des moyens de fixation rapide du type fixation à ressort et/ou à clippage. On peut voir à titre d'exemple représenté schématiquement sur l'image des éléments de soutien 31 et des moyens de fixation rapide 33 du gabarit 30. En alternative, le dispositif d'assemblage peut comprendre de multiple gabarits configurés pour soutenir chacune des vessies indépendamment les unes des autres. Une table d'assemblage (non représentée) conforme à l'invention peut comprendre une surface d'assemblage, par exemple horizontale, et sur laquelle est disposée un dispositif d'assemblage configuré pour recevoir l'étage redresseur par un mouvement relatif entre le redresseur et la table dans une direction verticale correspondant à la direction axiale du redresseur. Dans cette disposition, les vessies sont orientées vers le haut au-dessus de la table d'assemblage. En alternative, la surface d'assemblage est apte à recevoir l'étage redresseur, et le dispositif d'assemblage 24, par exemple celui présenté sur l'image, est configuré pour pouvoir être appliqué sur l'étage redresseur.

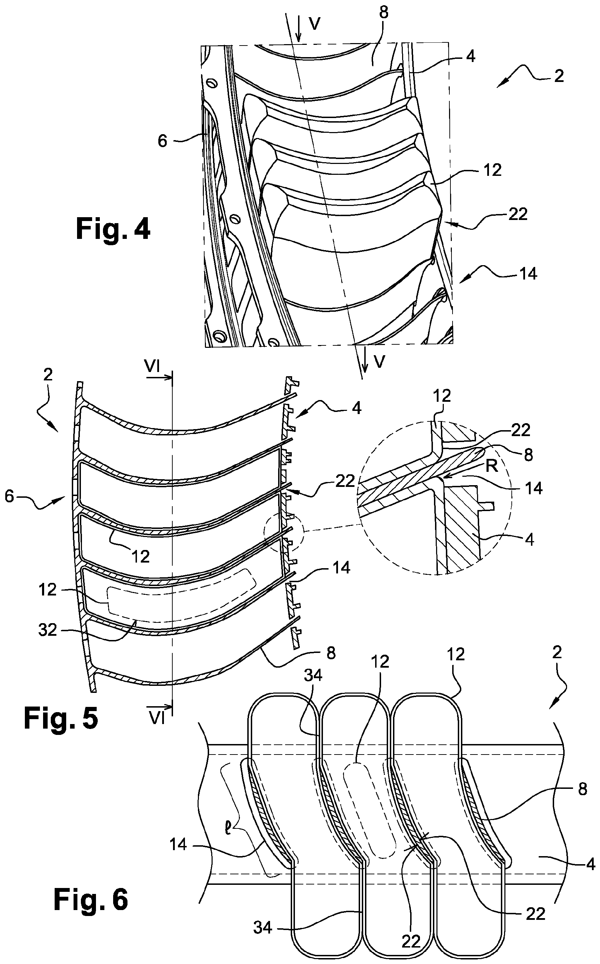

La figure 4 est une vue en perspective de l'étage redresseur 2 équipé de vessies gonflables 12 en vue de réaliser l'assemblage en question. Les vessies 12 sont présentées dans un mode avantageux de réalisation de l'invention, en ce que le procédé d'assemblage, plus précisément à sa première étape, comprend la mise en position d'au moins une aube 8, en l'occurrence les aubes 8, sur la virole externe 6 visible à gauche de l'image. Les aubes 8 sont également assemblées sur la virole interne 4 à droite de l'image, les vessies 12 lors de leur gonflage ayant alors comme appui chacune des viroles interne 4 et externe 6 ; les vessies 12 en se gonflant s'appliquent également entre deux aubes voisines 8. On peut dans le bas de l'image des ajours 14 entre chacune des aubes 8 et l'une des viroles, en l'occurrence la virole interne 4, ces ajours 14 étant destinés à recevoir le matériau de scellement pour former les joints de liaison. Les vessies gonflées 12 sont aptes à former une surface de retenue 22 contre les ajours 14 et ce à la périphérie des aubes 8. Les surfaces de retenue 22 peuvent être jointives à l'avant et/ou à l'arrière, au-dessus et/ou en-dessous du redresseur sur l'image, de chacune des aubes 8. Dans un mode alternatif de réalisation (non représenté), le gabarit vu en relation avec la figure 3 peut comprendre des faces d'appui radial des vessies 12, ces faces d'appui pouvant être situées entre les viroles interne 4 et externe 6 et remplacer les appuis réalisés par l'une 6 des viroles interne 4 et externe 6 de l'étage redresseur 2.

La figure 5 est une vue en coupe radiale de l'étage redresseur 2 selon le mode avantageux de l'invention vu en relation avec la figure précédente. On peut voir les vessies 12 en appui sur l'une et l'autre des viroles interne 4 et externe 6 et appliquées de chaque côté des aubes 8. On peut observer les surfaces de retenue 22 des vessies 12 contre les ajours 14, la portion agrandie de la figure à droite de l'image principale permettant d'apprécier le rayon de raccordement « R » formé par ces surfaces de retenue 22. Le rayon de raccordement « R » peut être d'une valeur comprise entre 0,2mm et 10mm, préférentiellement entre 2mm et 5mm. On peut également voir précisément sur la portion agrandie la virole 4, la vessie 12 à l'état gonflé, et l'aube 8 traversant l'ajour 14. Une vessie 12 est représentée sur l'image principale en pointillé à l'état non gonflé ou partiellement gonflé, la vessie est courbée le long de sa base 32 de façon à faciliter son insertion entre deux aubes 8 du redresseur 2. La courbure des vessies 12 à l'état non gonflé ou partiellement gonflé peut être favorablement sensiblement similaire à la courbure des aubes 8 dans leur étendue entre les viroles 4 et 6. La différence moyenne de rayon de courbure entre les vessies 12 à l'état non gonflé ou partiellement gonflé et les aubes peut être de moins de 10%.

La figure 6 est une vue en coupe tangentielle de l'étage redresseur 2 selon le mode avantageux de l'invention vu en relation avec les figures 4 et 5. La virole interne 4 est visible en arrière-plan sur l'image. Les ajours 14 recouverts par les vessies 12 sont représentés en pointillé en périphérie de chaque aube 8. Une vessie 12 non ou partiellement gonflée est représentée en pointillé entre deux aubes 8. On peut voir deux surfaces de retenue 22 réalisées par les vessies 12 à la périphérie de chacune des aubes 8, ces deux surfaces étant jointives à l'avant des aubes 8 aussi bien qu'à l'arrière des aubes de manière à couvrir la totalité de l'ajour 14 correspondant. On peut remarquer l'extension des vessies 12 à l'état gonflé dans la direction majoritairement axiale de l'étage redresseur 2, les portions jointives 34 des surfaces de retenue des vessies 12 pouvant s'étendre dans la direction essentiellement axiale de l'étage redresseur 2. Cette mesure est intéressante en ce qu'elle facilite la réalisation d'un joint de liaison de qualité en particulier à l'avant et à l'arrière de chacune des aubes 8. En effet, la réalisation du joint est facilitée par l'équilibre des efforts entre les surfaces d'appui, réalisées par ces portions jointives 34, en avant ou en arrière et de chaque côté des aubes 8. Les portions jointives 34 des surfaces de retenue peuvent être jointives sur une longueur supérieure à 20% de la largeur « l » des aubes, préférentiellement 50%.

## Revendications

1. Procédé d'assemblage d'un étage redresseur (2) de turbomachine, ledit étage comprenant une virole interne (4), une virole externe (6) et des aubes (8) s'étendant radialement entre les viroles interne (4) et externe (6), le procédé comportant les étapes suivantes :
(a) mise en position d'au moins une des aubes (8) et/ou d'au moins une partie (10) d'une des viroles interne (4) et externe (6), de manière à ce que ladite ou chacune desdites aubes (8) traverse un ajour (14), respectivement, de ladite virole (4) ou partie de virole (10) ; et
(c) application d'un matériau de scellement (20) entre l'aube (8), ou chacune des aubes (8), et l'ajour (14) correspondant, sur une face (18) de la virole (4) ou partie de virole (10), de manière à former un joint de liaison entre l'aube (8), ou chacune des aubes (8), et la virole (4) ou partie de virole (10) ;
**caractérisé en ce que** le procédé comprend l'étape intermédiaire suivante :
(b) application d'au moins une vessie gonflable (12) contre l'ajour (14) ou chacun des ajours (14), sur la face (16) de la virole (4) ou partie de virole (10) qui est opposée à la face d'application (18) du matériau de scellement, de manière à former une ou plusieurs surfaces de retenue (22) dudit matériau de scellement (20).

2. Procédé selon la revendication 1, **caractérisé en ce que** l'étape (b) du procédé comprend l'application de plusieurs vessies (12) reliées entre elles de manière aéraulique pour pouvoir être gonflées en même temps, préférentiellement à partir d'un distributeur central d'air.

3. Procédé selon la revendication 2, **caractérisé en ce que** les vessies (12) sont reliées entre elles via un support commun (26) apte à s'étendre le long de la virole (4) ou partie de virole (10) recevant le ou les joints de liaison.

4. Procédé selon l'une des revendications 1 à 3, **caractérisé en ce que** l'étape (b) comprend l'application de la vessie (12) ou d'au moins une des vessies (12) entre deux aubes voisines (8), respectivement, ladite ou chacune desdites vessies (12) étant ensuite gonflée de manière à prendre appui sur les deux aubes (8) et sur la virole (4) entre les deux aubes.

5. Procédé selon la revendication 4, **caractérisé en ce que** l'étape (a) comprend également la mise en place de l'autre des viroles interne (4) et externe (6), la vessie (12) ou chacune des vessies (12) étant gonflée de manière à prendre appui, en outre, sur ladite autre virole (6), entre les deux aubes (8).

6. Procédé selon l'une des revendications 1 à 5, **caractérisé en ce que** l'étape (b) comprend l'application d'une des vessies (12) de chaque côté de la ou d'au moins une des aubes (8) de manière à former deux surfaces de retenue (22) à la périphérie de ladite aube (8), ou de chacune desdites aubes (8), lesdites surfaces (22) étant jointives à l'avant et/ou à l'arrière de ladite aube (8).

7. Procédé selon la revendication 6, **caractérisé en ce que** les deux surfaces de retenue (22) à la périphérie de l'aube (8) ou de chacune des aubes (8) sont jointives à l'avant et à l'arrière de ladite aube de manière à couvrir la totalité de l'ajour (14) correspondant.

8. Procédé selon l'une des revendications 1 à 7, **caractérisé en ce que** la ou chacune des surfaces de retenue (22) de la ou des vessies (12) contre l'ajour (14) ou contre chacun des ajours (14) forme un rayon de raccordement d'une valeur comprise entre 0,2mm et 10mm, préférentiellement comprise entre 2mm et 5mm.

9. Procédé de montage selon l'une des revendications 1 à 8, **caractérisé en ce que** l'étape (c) est suivie d'une étape de remplissage d'abradable dans et/ou sur la virole interne (4) par le matériau de scellement (22) utilisé à l'étape (b) ou bien par un matériau d'un autre type, lesdits matériaux de scellement (22) et d'un autre type étant préférentiellement à base de silicone.

10. Dispositif d'assemblage d'un étage redresseur (2) de turbomachine, le redresseur comprenant une virole interne (4) ou une partie de virole (10) interne, une virole externe (6) ou une partie de virole externe et des aubes (8) s'étendant radialement entre les viroles (4 ; 6) ou parties de virole (10) interne et externe et montées au travers d'ajours (14) dans les viroles (4) ou parties de virole (10), le dispositif d'assemblage comprend plusieurs vessies gonflables (12) configurées pour être appliquées entre des aubes (8) voisines et contre des ajours (14) puis gonflées pour former une ou plusieurs surfaces de retenue (22) d'un matériau de scellement (20) lors de son application entre les aubes (8) et les ajours(14), caractérisé en ce qui'il comprend un support allongé (26) reliant les vessies gonflables (12), ledit support (26) étant destiné à être connecté à une source de gaz sous pression et à distribuer ledit gaz dans chacune des vessies (12), et un gabarit (30) apte à soutenir le support allongé (26), ledit gabarit (30) étant réalisé pour être fixé sur une virole (4) ou une partie de virole (10).

11. Dispositif selon la revendication 10, **caractérisé en ce que** le un support allongé (26) est en forme de tore ou portion de tore.

12. Dispositif selon la revendication 11, **caractérisé en ce que** le gabarit (30) comprend des moyens de fixation rapide à la virole (4) ou à la partie de virole (10), préférentiellement des moyens de fixation à ressort et/ou à clippage.

13. Table d'assemblage d'un étage redresseur (2) de turbomachine, **caractérisée en ce qu'**elle comprend :
- une surface d'assemblage généralement horizontale ; et
- un dispositif d'assemblage (24) selon l'une des revendications 10 à 12, ledit dispositif (24) étant disposé sur la surface d'assemblage.

14. Table d'assemblage selon la revendication 13, **caractérisée en ce que** le dispositif d'assemblage (24) est configuré pour pouvoir être appliqué sur l'étage redresseur (2) par un mouvement relatif entre ledit étage (2) et la table dans la direction axiale du redresseur (2).

## Patentansprüche

1. Verfahren zur Montage einer Leitapparatstufe (2) einer Turbomaschine, wobei besagte Stufe einen inneren Ring (4), einen äußeren Ring (6) und sich radial zwischen dem inneren Ring (4) und dem äußeren Ring (6) erstreckende Schaufeln (8) umfasst, wobei das Verfahren die folgenden Schritte umfasst:
(a) Positionieren mindestens einer der Schaufeln (8) und/oder mindestens eines Teils (10) eines des inneren Rings (4) und des äußeren Rings (6) derart, dass die besagte oder jede der Schaufeln (8) durch eine Öffnung (14) des Rings (4) beziehungsweise Ringteils (10) hindurch verläuft; und
(c) Anbringen eines Dichtungsmaterials (20) zwischen der Schaufel (8), oder jeder der Schaufeln (8), und der entsprechenden Öffnung (14), an einer Seite (18) des Rings (4) oder Ringteils (10), sodass eine Verbindungsfuge zwischen der Schaufel (8), oder jeder der Schaufeln (8), und dem Ring (4) oder Ringteil (10) gebildet wird;
**dadurch gekennzeichnet, dass** das Verfahren den folgenden Zwischenschritt umfasst:
(b) Anbringen mindestens eines aufblasbaren Balgs (12) gegen die Öffnung (14) oder jede der Öffnungen (14), an derjenigen Seite (16) des Rings (4) oder Ringteils (10), die sich gegenüber der Seite (18) zur Anbringung des Dichtungsmaterials befindet, um eine oder mehrere Rückhalteflächen (22) besagten Dichtungsmaterials (20) zu bilden.

2. Verfahren nach Anspruch 1, **dadurch gekennzeichnet, dass** Schritt (b) des Verfahrens die Anbringung mehrerer Bälge (12) umfasst, die lufttechnisch miteinander verbunden sind, sodass sie zur selben Zeit aufgeblasen werden können, bevorzugt von einem zentralen Luftverteiler.

3. Verfahren nach Anspruch 2, **dadurch gekennzeichnet, dass** die Bälge (12) mittels eines gemeinsamen Trägers (26) miteinander verbunden sind, der fähig ist, sich entlang dem Ring (4) oder Ringteil (10) zu erstrecken, der die eine oder mehr Verbindungsfugen aufnimmt.

4. Verfahren nach einem der Ansprüche 1 bis 3, **dadurch gekennzeichnet, dass** Schritt (b) das Anbringen des Balgs (12) oder mindestens eines der Bälge (12) jeweils zwischen zwei benachbarten Schaufeln (8) umfasst, wobei der besagte oder jeder der besagten Bälge (12) dann aufgeblasen wird, sodass er gegen die zwei Schaufeln (8) und den Ring (4) zwischen den zwei Schaufeln drückt.

5. Verfahren nach Anspruch 4, **dadurch gekennzeichnet, dass** Schritt (a) auch das Platzieren des anderen des inneren Rings (4) und des äußeren Rings (6) umfasst, wobei der Balg (12) oder jeder der Bälge (12) aufgeblasen sind, sodass sie auch auf den besagten anderen Ring (6) drücken, zwischen den zwei Schaufeln (8).

6. Verfahren nach einem der Ansprüche 1 bis 5, **dadurch gekennzeichnet, dass** Schritt (b) das Anbringen eines der Bälge (12) zu beiden Seiten der oder mindestens einer der Schaufeln (8) umfasst, sodass zwei Rückhalteflächen (22) am Umfang der Schaufel (8) oder jeder der Schaufeln (8) gebildet werden, wobei die Flächen (22) vorn und/oder hinten an der Schaufel (8) gegeneinander anliegend sind.

7. Verfahren nach Anspruch 6, **dadurch gekennzeichnet, dass** die zwei Rückhalteflächen (22) am Umfang derSchaufel (8) oder jeder der Schaufeln (8) vorn und hinten an der Schaufel gegeneinander anliegend sind, um die Gesamtheit der entsprechenden Öffnung (14) abzudecken.

8. Verfahren nach einem der Ansprüche 1 bis 7, **dadurch gekennzeichnet, dass** die oder jede der Rückhalteflächen (22) des einen oder der mehreren Bälge (12) gegen die Öffnung (14) oder gegen jede der Öffnungen (14) einen Verbindungsradius zwischen 0,2 mm und 10 mm, bevorzugt zwischen 2 mm und 5 mm bildet.

9. Montageverfahren nach einem der Ansprüche 1 bis 8, **dadurch gekennzeichnet, dass** Schritt (c) gefolgt wird von einem Schritt des Füllens von abtragbarem Material in und/oder auf den inneren Ring (4), unter Verwendung des in Schritt (b) verwendeten Dichtungsmaterials (22) oder unter Verwendung eines anderen Typs von Material, wobei das Dichtungsmaterial (22) und Material eines anderen Typs bevorzugt silikonbasiert sind.

10. Vorrichtung zur Montage einer Leitapparatstufe (2) einer Turbomaschine, wobei der Leitapparat einen inneren Ring (4) oder einen inneren Ringteil (10), einen äußeren Ring (6) oder einen äußeren Ringteil und Schaufeln umfasst, die sich radial zwischen den Ringen (4; 6) oder dem inneren (10) und dem äußeren Ringteil erstrecken und durch Öffnungen (14) in den Ringen (4) oder Teilen eines Rings (10) montiert sind, wobei die Vorrichtung zur Montage mehrere aufblasbare Bälge (12) umfasst, die dafür ausgelegt sind, zwischen benachbarten Schaufeln (8) und gegen Öffnungen (14) angebracht zu werden und dann aufgeblasen zu werden, um eine oder mehrere Rückhalteflächen (22) eines Dichtungsmaterials (20) zu bilden, wenn es zwischen den Schaufeln (8) und den Öffnungen (14) angebracht wird, **dadurch gekennzeichnet, dass** sie einen länglichen Träger (26) umfasst, der die aufblasbaren Bälge (12) verbindet, wobei der Träger (26) dafür ausgelegt ist, mit einer Quelle von Druckgas verbunden zu werden und besagtes Gas in jeden der Bälge (12) zu verteilen, und eine Spannvorrichtung (30), die fähig ist, den länglichen Träger (26) zu tragen, wobei die Spannvorrichtung (30) so ausgeführt ist, dass sie an einem Ring (4) oder einem Ringteil (10) fixiert werden kann.

11. Vorrichtung nach Anspruch 10, **dadurch gekennzeichnet, dass** der längliche Träger (26) in Form eines Torus oder eines Abschnitts eines Torus vorliegt.

12. Vorrichtung nach Anspruch 11, **dadurch gekennzeichnet, dass** die Spannvorrichtung (30) Mittel zur raschen Fixierung an dem Ring (4) oder an dem Ringteil (10) umfasst, bevorzugt federbelastete und/oder Einrast-Fixiermittel.

13. Tisch zur Montage einer Leitapparatstufe (2) einer Turbomaschine, **dadurch gekennzeichnet, dass** er umfasst:
- eine generell horizontale Montagefläche; und
- eine Montagevorrichtung (24) nach einem der Ansprüche 10 bis 12, wobei die Vorrichtung (24) auf der Montagefläche angeordnet ist.

14. Montagetisch nach Anspruch 13, **dadurch gekennzeichnet, dass** die Montagevorrichtung (24) so ausgelegt ist, dass sie mittels einer relativen Bewegung zwischen der Stufe (2) und dem Tisch in der axialen Richtung des Leitapparats (2) an der Leitapparatstufe (2) angebracht werden kann.

## Claims

1. Method for assembling a stator stage (2) of a turbomachine, said stage comprising an inner ring (4), an outer ring (6) and vanes (8) extending radially between the inner ring (4) and outer ring (6), the method comprising the following steps:
(a) positioning at least one of the vanes (8) and/or at least one part (10) of one (4) of the inner ring (4) and outer ring (6), such that said or each one of said vanes (8) passes through an opening (14), respectively, of said ring (4) or ring part (10); and
(c) applying a sealing material (20) between the vane (8), or each one of the vanes (8), and the corresponding opening (14), on one face (18) of the ring (4) or ring part (10), so as to form a connection joint between the vane (8), or each one of the vanes (8), and the ring (4) or ring part (10);
**characterized in that** the method comprises the following intermediate step:
(b) applying at least one inflatable bladder (12) against the opening (14) or each one of the openings (14), on that face (16) of the ring (4) or ring part (10) which is opposite the face (18) for application of the sealing material, so as to form one or more retention surfaces (22) of said sealing material (20).

2. Method according to Claim 1, **characterized in that** step (b) of the method comprises the application of multiple bladders (12) connected to one another aeraulically such that they can be inflated at the same time, preferentially from a central air distributor.

3. Method according to Claim 2, **characterized in that** the bladders (12) are connected to one another via a common support (26) able to extend along the ring (4) or ring part (10) receiving the one or more connection joints.

4. Method according to one of Claims 1 to 3, **characterized in that** step (b) comprises applying the bladder (12) or at least one of the bladders (12) between two adjacent vanes (8), respectively, said or each one of said bladders (12) then being inflated so as to press against the two vanes (8) and the ring (4) between the two vanes.

5. Method according to Claim 4, **characterized in that** step (a) also comprises placing the other of the inner ring (4) and outer ring (6), the bladder (12) or each one of the bladders (12) being inflated so as to also press on said other ring (6), between the two vanes (8).

6. Method according to one of Claims 1 to 5, **characterized in that** step (b) comprises applying one of the bladders (12) on either side of the or at least one of the vanes (8) so as to form two retention surfaces (22) at the periphery of said vane (8), or of each one of said vanes (8), said surfaces (22) being contiguous at the front and/or at the rear of said vane (8).

7. Method according to Claim 6, **characterized in that** the two retention surfaces (22) at the periphery of the vane (8) or of each one of the vanes (8) are contiguous at the front and at the rear of said vane so as to cover all of the corresponding opening (14).

8. Method according to one of Claims 1 to 7, **characterized in that** the or each one of the retention surfaces (22) of the one or more bladders (12) against the opening (14) or against each one of the openings (14) forms a connection radius between 0.2 mm and 10 mm, preferentially between 2 mm and 5 mm.

9. Assembly method according to one of Claims 1 to 8, **characterized in that** step (c) is followed by a step of filling abradable material in and/or on the inner ring (4) using the sealing material (22) used in step (b) or using another type of material, said sealing material (22) and material of another type being preferentially silicone-based.

10. Device for assembling a stator stage (2) of a turbomachine, the stator comprising an inner ring (4) or an inner ring part (10), an outer ring (6) or an outer ring part and vanes (8) which extend radially between the rings (4; 6) or inner (10) and outer ring parts and are mounted through openings (14) in the rings (4) or parts of a ring (10), the device for assembling comprises multiple inflatable bladders (12) configured to be applied between adjacent vanes (8) and against openings (14) then inflated to form one or more retention surfaces (22) of a sealing material (20) when it is applied between the vanes (8) and the openings(14), **characterized in that** it comprises
an elongate support (26) connecting the inflatable bladders (12), said support (26) being designed to be connected to a source of pressurized gas and to distribute said gas into each one of the bladders (12), and
a jig (30) able to support the elongate support (26), said jig (30) being made so as to be fixed on a ring (4) or a ring part (10).

11. Device according to Claim 10, **characterized in that** the elongate support (26) is in the form of a torus or a portion of a torus.

12. Device according to Claim 11, **characterized in that** the jig (30) comprises means for rapid fixing to the ring (4) or to the ring part (10), preferentially spring-loaded and/or snap-fitting fixing means.

13. Table for assembling a stator stage (2) of a turbomachine, **characterized in that** it comprises:
- a generally horizontal assembly surface; and
- an assembly device (24) according to one of Claims 10 to 12, said device (24) being arranged on the assembly surface.

14. Assembly table according to Claim 13, **characterized in that** the assembly device (24) is configured such that it can be applied to the stator stage (2) by means of a relative movement between said stage (2) and the table in the axial direction of the stator (2).
